(19) Europäisches Patentamt
European Patent Office
Office européen des brevets

(11) **EP 2 507 075 B1**

(12) **FASCICULE DE BREVET EUROPEEN**

(45) Date de publication et mention
de la délivrance du brevet:
**25.06.2014 Bulletin 2014/26**

(21) Numéro de dépôt: **10787453.9**

(22) Date de dépôt: **06.12.2010**

(51) Int Cl.:
**B60C 11/12** *(2006.01)*    **B60C 11/03** *(2006.01)*

(86) Numéro de dépôt international:
**PCT/EP2010/068988**

(87) Numéro de publication internationale:
**WO 2011/067414 (09.06.2011 Gazette 2011/23)**

(54) **BANDE DE ROULEMENT POUR PNEUMATIQUE COMPORTANT DES CAVITES PARTICULIERES**

REIFENPROFIL MIT SPEZIELLEN VERTIEFUNGEN

TYRE TREAD COMPRISING SPECIFIC CAVITIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.12.2009 FR 0958665**

(43) Date de publication de la demande:
**10.10.2012 Bulletin 2012/41**

(73) Titulaires:
• **Compagnie Générale des Etablissements
  Michelin
  63000 Clermont-Ferrand (FR)**
• **MICHELIN Recherche et Technique S.A.
  1763 Granges-Paccot (CH)**

(72) Inventeur: **FRAENKEL, Bertrand
F-63210 Saint-Pierre-Roche (FR)**

(74) Mandataire: **Lasson, Cédric Y. M.
Manufacture Française
des Pneumatiques Michelin
SGD/LG/PI-F35-Ladoux
63040 Clermont-Ferrand Cedex 9 (FR)**

(56) Documents cités:
**EP-A1- 1 566 292    EP-A1- 1 616 719
FR-A1- 2 763 892**

**Description**

DOMAINE DE L'INVENTION

L'invention concerne les bandes de roulement de pneumatique pour pneumatique neige et plus particulièrement des bandes de roulement comportant une pluralité de lames.

Une telle bande de roulement de pneumatique, correspondant au préambule de la revendication 1, est connue du document FR 2 763 892 ou EP 1 616 719.

ETAT DE LA TECHNIQUE

Une bande de roulement pour pneumatique neige comprend une surface de roulement destinée à venir en contact avec une chaussée pendant le roulage. Il est connu de pourvoir cette bande avec des lames de matière délimitées par des découpures.

Chaque lame de matière comprend une surface de contact apte à venir en contact avec une chaussée.

Chaque lame de matière comporte également des arêtes pour « gratter la neige ».

Au cours de la période d'utilisation du pneumatique neige, celui-ci peut rouler dans des conditions de chaussée enneigée mais également dans des conditions de chaussée sèche.

Dans le cas d'une chaussée enneigée, une augmentation de la pression de contact sur les arêtes de la lame est recherchée afin d'amplifier l'effet de « gratter » la neige. Dans le cas d'une chaussée sèche, on cherche à obtenir une pression de contact répartie de manière homogène sur l'ensemble de la surface de contact de la lame.

Or, la pression de contact recherchée sur les arêtes dans le cas d'une chaussée enneigée est bien supérieure à la pression de contact recherchée sur la surface de contact dans le cas d'une chaussée sèche.

L'invention vise à proposer une bande de roulement de pneumatique adaptée pour fonctionner de manière optimale tant sur chaussée enneigée que sur chaussée sèche.

DEFINITIONS

Par « pneumatique », on entend tous les types de bandages élastiques soumis au cours d'un roulage à une pression interne ou non.

Par « pneumatique neige » (« snow tyre » ou « winter tyre » en anglais), on entend un pneumatique repéré par une inscription M+S ou M.S. ou encore M&S, marquée sur au moins un des flancs du pneumatique. Ce pneumatique neige se caractérise par un dessin de la bande de roulement et une structure destinés avant tout à assurer, dans la boue et la neige fraîche ou fondante, un comportement meilleur que celui d'un pneumatique du type routier (en anglais appelés « road type tyre ») conçu pour rouler sur des sols non enneigés.

Par « bande de roulement d'un pneumatique », on entend une quantité de composition de caoutchouc délimitée par des surfaces latérales et par deux surfaces principales dont une est destinée à entrer en contact avec un sol lorsque le pneumatique roule.

Par « surface de roulement », on entend la surface formée par les points de la bande de roulement du pneumatique qui entrent en contact avec le sol lorsque le pneumatique roule.

Par « rainure » (« groove » en anglais), on entend une découpure (« cut-out » en anglais) dont les faces de matière ne se touchent pas dans les conditions usuelles de roulage. Généralement, la largeur d'une rainure est supérieure ou égale à 1 mm.

Par « incision » (« sipe » en anglais), on entend une découpure dont les faces de matière se touchent dans les conditions usuelles de roulage. Généralement, la largeur d'une incision est inférieure à 1 mm.

Par « lame », on entend un bloc de gomme délimité par deux découpures transversales. La lame présente un grand élancement, c'est-à-dire une grande longueur et une grande hauteur pour une largeur faible relativement à cette longueur et à cette hauteur. La longueur de la lame est la dimension de ladite lame selon une direction transversale. La largeur de la lame est la dimension de ladite lame selon une direction circonférentielle. La hauteur de la lame est la dimension de ladite lame selon une direction radiale, c'est-à-dire selon une direction perpendiculaire à la surface de contact de la lame.

Par direction circonférentielle, on entend une direction tangente à un cercle dont le centre est sur l'axe de rotation d'un pneumatique pourvu de la bande de roulement.

Par direction transversale, on entend une direction parallèle à l'axe de rotation dudit pneumatique.

Par « partie inclinée de la cavité », on entend une partie en creux délimitée par au moins deux parois de gomme inclinées.

RESUME DE L'INVENTION

L'invention concerne une bande de roulement pour pneumatique neige comportant des lames délimitées par des découpures, chaque lame comprenant une surface de contact destinée à entrer en contact avec une chaussée, tout ou partie desdites lames comprenant au moins une cavité formée de deux parties inclinées s'étendant dans la longueur de la lame, lesdites parties inclinées formant un V selon une coupe circonférentielle, le sommet dudit V étant dirigé vers la surface de contact de la lame. L'angle d'inclinaison de chaque partie inclinée par rapport à une direction perpendiculaire à la surface de contact est compris entre 30° et 60° et la distance L mesurée entre les extrémités du V opposées au sommet est déterminée de sorte que $L \leq \frac{1}{2} * W$, avec W la largeur de la lame mesurée selon la direction circonférentielle. L'épaisseur E de chaque partie inclinée est déterminée de sorte que $E \leq \frac{1}{2} * L$. La bande de roulement comprend une incision s'étendant principalement selon la direction circonférentielle et par laquelle la cavité débouche sur la surface de contact de la lame.

La présence de cavités avec des dimensions déterminées conformément à ce qui est décrit ci-dessus, permet d'avoir un comportement différent des lames selon le type de chaussée (chaussée enneigée ou chaussée sèche). Dans le cas où la bande de roulement roule sur une chaussée enneigée, l'adhérence entre la lame et la chaussée est faible, la sollicitation tangentielle qui va alors s'exercer sur la lame va entraîner une déformation modérée de cette lame par cisaillement. Cette déformation modérée de la lame ne va pas permettre un écrasement suffisant de la lame pour faire disparaître les effets de la cavité dans la lame. La pression qui va s'exercer sur la surface de contact de la lame va ainsi être plus faible dans les zones de la surface de contact au droit de la cavité et plus forte dans les autres zones de la surface de contact, notamment à proximité des arêtes transversales de la lame.

Dans le cas où la bande de roulement roule sur une chaussée sèche, l'adhérence entre la lame et la chaussée est plus importante, la sollicitation qui va alors s'exercer sur la lame est telle que la cavité est complètement fermée. On rend alors plus homogène la répartition de pression sur la surface de contact de la lame.

En prenant un angle d'inclinaison des parties inclinées compris entre 30° et 60° par rapport à une direction perpendiculaire à la surface de contact de la lame, on améliore le phénomène recherché tout en facilitant le démoulage d'un élément moulant formant la cavité.

Plus particulièrement, l'élément moulant comporte deux éléments inclinés pour mouler la cavité. L'élément moulant comprend également une âme solidaire des éléments inclinés. L'âme crée une incision débouchant sur la surface de contact. En configurant l'élément moulant de manière à ce que l'incision formée par l'âme s'étend principalement selon la direction circonférentielle, c'est-à-dire globalement perpendiculairement à la direction d'extension de la cavité dans la longueur de la lame, on évite que l'incision vienne perturber d'une manière trop importante le fonctionnement de la cavité lorsque la lame est en contact avec le sol.

De manière préférentielle, $E = \dfrac{K}{(W-L)}$, avec K compris entre 1,5 et 3,5.

L'épaisseur E est ainsi inversement proportionnelle à la différence entre la largeur de la lame et la distance entre les deux extrémités du V. Plus cette différence est importante, plus la lame est rigide et il est alors plus difficile de fermer la cavité. Il faut donc prévoir une épaisseur de cavité plus faible pour que la cavité puisse se fermer au cours d'un roulage sur une chaussée sèche.

Inversement, plus cette différence est faible, moins la lame est rigide et il est plus facile de fermer la cavité. Il faut donc prévoir une épaisseur de cavité plus importante pour que la cavité reste ouverte au cours d'un roulage sur une chaussée enneigée.

De manière préférentielle, K est compris entre 2 et 3. Encore plus préférentiellement, k est égal à 2,4.

De manière préférentielle, l'angle d'inclinaison de chaque partie inclinée est de 45 degrés.

On améliore le démoulage de l'élément moulant formant la cavité.

Dans une variante de réalisation, les extrémités du V opposées au sommet se terminent en pointe.

On améliore davantage le démoulage de l'élément moulant formant la cavité.

Dans une variante de réalisation, les parties inclinées sont dissymétriques.

Par cette dissymétrie des parties inclinées, il possible d'augmenter la pression de contact au niveau d'une première arête de la lame et de diminuer cette pression de contact au niveau d'une seconde arête opposée à la première arête.

Dans une variante de réalisation, la lame comprend au moins deux cavités décalées l'une de l'autre dans la hauteur de ladite lame d'une distance au moins égale à 0,1 mm et au plus égale à 8 mm.

Ainsi, même après une certaine usure de la bande de roulement, on garantit dans le temps un comportement différent de la lame selon le type de chaussée rencontré.

D'autres caractéristiques et avantages de l'invention ressortiront de la description suivante, donnée à titre d'exemple, sans caractère limitatif, en regard des dessins annexés sur lesquels :

- la figure 1 présente une vue partielle de la surface de roulement d'une bande de roulement conforme à l'invention;

- la figure 2 présente un bloc de gomme appartenant à la bande de roulement de la figure 1 comportant une pluralité de lames ;

- la figure 3 présente schématiquement une vue en perspective d'une partie d'une lame de la figure 2 comportant une cavité conforme à un premier mode de réalisation ;

- la figure 4 présente schématiquement une vue en coupe circonférentielle de la lame selon la ligne I-I de la figure 2;

- la figure 5 présente une vue en coupe circonférentielle d'une lame conformément à un second mode de réalisation ;

- la figure 6 présente schématiquement un élément moulant apte à mouler les cavités de la figure 5 ;

- la figure 7 présente une vue en coupe transversale de la lame de la figure 5 ;

- la figure 8 présente une vue en coupe circonférentielle d'une lame conformément à un troisième mode de réalisation ;

- la figure 9 présente une vue en coupe circonférentielle d'une lame conformément à un quatrième mode de réalisation.

Dans la description qui va suivre, des éléments sensiblement identiques ou similaires seront désignés par des références identiques.

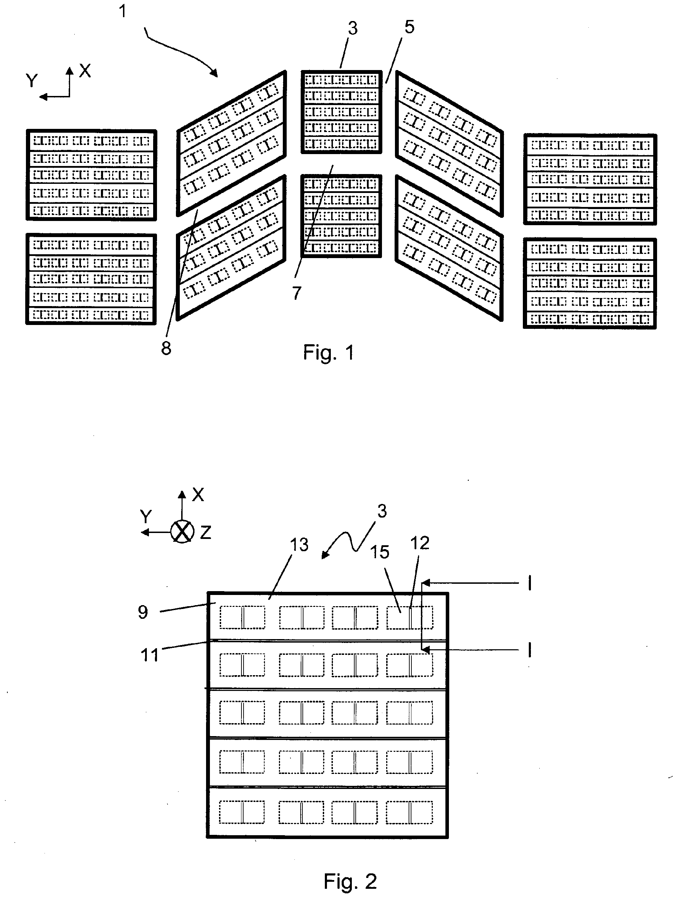

La figure 1 présente une vue partielle d'une surface de roulement d'une bande de roulement 1.

La bande de roulement 1 comprend des blocs de gomme 3 en relief. Les blocs de gomme sont délimités par des rainures 5, 7, 8. On distingue ainsi sur la figure 1, des rainures 5 s'étendant selon une direction circonférentielle, (c'est-à-dire selon la direction X de la figure 1), des rainures 7 s'étendant selon une direction transversale (c'est-à-dire selon la direction Y de la figure 1), et des rainures 8 s'étendant selon une direction oblique. Les rainures 5, 7, 8 favorisent le drainage de l'eau lorsque la chaussée est humide.

La figure 2 représente plus spécifiquement un bloc de gomme 3. Le bloc de gomme 3 comprend une pluralité d'incisions transversales 11. Les incisions transversales délimitent des lames de gomme.

Chaque lame de gomme 9 comprend au moins une cavité 15. Dans l'exemple présenté à la figure 2, chaque lame 9 comprend 4 cavités qui s'étendent principalement dans la longueur de la lame 9, c'est-à-dire selon la direction transversale Y. Chaque cavité 15 est présente à l'intérieur de la lame 9 sous la surface de contact 13 de la lame 9. Chaque lame 9 comprend également une première arête et une seconde arête qui s'étendent selon la direction transversale Y. La première arête est ici confondue avec un bord de l'élément 3 (représenté en trait fort sur la figure 2) et la seconde arête est définie par l'incision 11 qui sépare la lame 9 d'une autre lame adjacente. Ce sont ces arêtes qui viennent gratter la neige au cours d'un roulage de la bande de roulement.

La lame 9 comprend, en outre, une pluralité d'incisions circonférentielles 12 s'étendant selon la direction circonférentielle X et débouchant sur la surface de contact 13 de la lame 9. Chaque incision circonférentielle 12 s'étend radialement vers l'intérieur de la bande de roulement et débouche dans une des cavités 15.

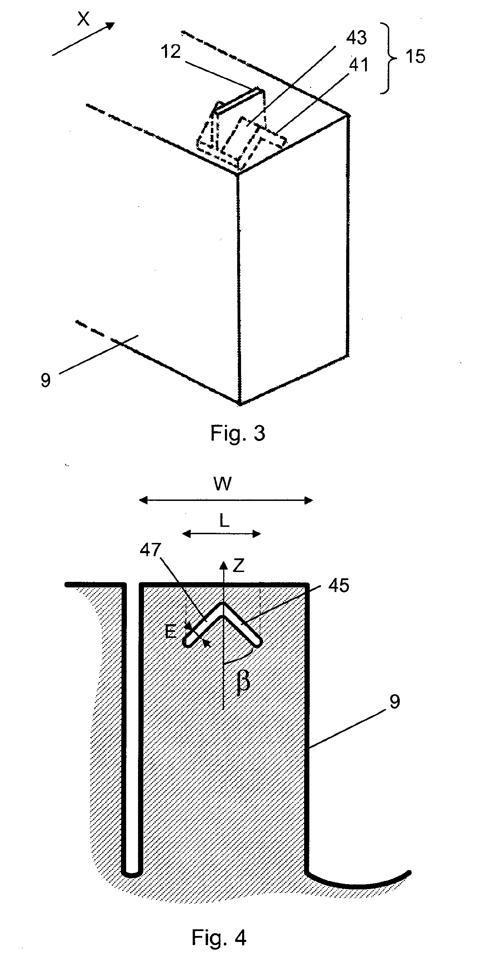

La figure 3 présente schématiquement une vue en perspective d'une partie de la lame 9 de la figure 2.

La cavité 15 de la lame 9 est formée de deux parties inclinées 41 et 43. Chaque partie inclinée 41 43 s'étend dans la longueur de la lame selon la direction transversale.

Comme il a déjà été précisé, l'incision circonférentielle 12 s'étend selon la direction circonférentielle X et c'est par cette incision 12 que la cavité 15 débouche sur la surface de contact 13 de la lame 9.

La figure 4 présente schématiquement une vue en coupe de la lame selon la ligne I-I de la figure 2.

Dans cette vue en coupe, les parties inclinées 41, 43 forment une première branche 45 et une seconde branche 47. La première branche 45 et la seconde branche 47 se rejoignent pour former un chevron, c'est-à-dire un motif en forme de V. Le sommet du motif en forme de V est dirigé vers la surface de contact 13 de la lame 9.

La distance L mesurée entre les extrémités des branches 45, 47 est déterminée de sorte que

$$L \leq \frac{1}{2} * W \; ,$$ avec W la largeur de la lame mesurée selon la direction circonférentielle. La distance L est ici mesurée selon la direction circonférentielle X.

Chaque branche de la cavité a une épaisseur E correspondant à la distance entre deux parois de gomme inclinées formant la partie inclinée associée à cette branche. L'épaisseur E de chaque branche est déterminée de sorte que $E \leq \frac{1}{2} * L$ .

De manière préférentielle, $E = \dfrac{K}{(W - L)}$ ,

avec K compris entre 1,5 et 3,5.

Dans un mode de réalisation particulier, K=2,4. Ainsi dans l'exemple où W = 8 mm et L = 4 mm, on a E=0,6mm.

Chaque branche 45, 47 forme ici un angle β avec la direction perpendiculaire à la surface de contact 13 (c'est-à-dire la direction Z). L'angle β est ici compris entre 30° et 60°.

De manière préférentielle, l'angle β est de l'ordre de 45°.

On notera que les pointillés présents sur la figure 4 délimitent l'incision circonférentielle 12 associée aux parties inclinées 41, 43, cette incision étant décalée par rapport au plan de la figure 4.

Au cours du roulage du pneumatique, la cavité 15 de la lame 9 peut prendre différents états en fonction de l'adhérence entre la surface de contact de la lame et la chaussée.

Dans le cas où la chaussée est enneigée, l'adhérence entre la surface de contact de la lame et la chaussée est faible (par exemple inférieure à 0,7). La sollicitation tangentielle qui va alors s'exercer sur la lame va entraîner une déformation modérée de la lame. La cavité prend ainsi un état intermédiaire entre un état ouvert dans lequel les parois de gomme inclinées délimitant les parties inclinées de la cavité sont distantes et un état fermé dans lequel les parois de gomme inclinées sont en contact.

Dans le cas où la chaussée est sèche, l'adhérence entre la surface de contact de la lame et la chaussée est plus importante (par exemple supérieure à 0,7). La sollicitation tangentielle qui va alors s'exercer sur la lame va entraîner une déformation plus importante de la lame. La déformation de la lame va rapprocher les parois inclinées de gomme délimitant la cavité et à terme la cavité va se fermer. Dans l'état où la cavité est complètement fermée, la lame a une rigidité qui correspond sensiblement à celle d'une lame dépourvue de cavité.

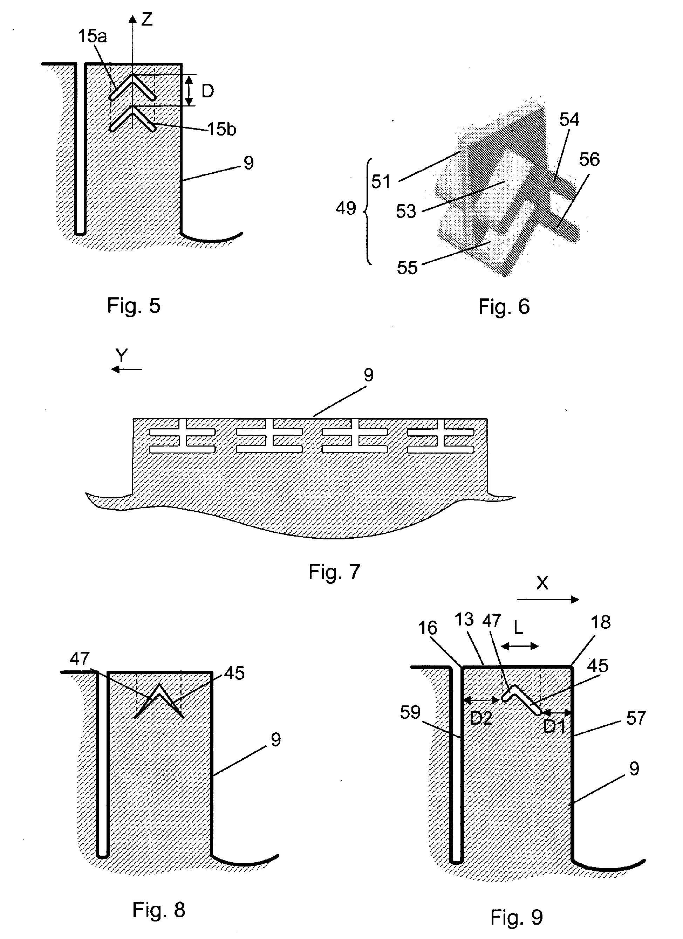

La figure 5 présente une vue en coupe circonférentielle d'une lame conformément à un second mode de réalisation.

Dans ce mode de réalisation, la lame 9 comprend deux cavités 15a, 15b décalées l'une de l'autre, selon la direction Z, d'une distance D.

La distance D est au moins égale à 0,1 mm et au plus égale à 8 mm.

La figure 6 présente schématiquement un élément moulant 49 apte à mouler les cavités 15a, 15b de la figure 5.

L'élément moulant 49 comprend une âme 51 et quatre éléments inclinés 53, 54, 55, 56. L'âme 51 et les quatre éléments inclinés 53, 54, 55, 56 sont ici venus de matière.

L'âme 51 est apte à mouler une incision circonférentielle 12 et les quatre éléments inclinés 53, 54, 55, 56 sont aptes à mouler respectivement les parties inclinées des cavités 15a et 15b.

On notera que l'extrémité libre de l'âme 51 est destinée à être fixée à un moule de vulcanisation.

La figure 7 présente une vue en coupe transversale de la lame 9 de la figure 5.

Dans cette coupe, la lame 9 comprend deux niveaux de cavités dans la hauteur de la lame. Chaque niveau comprend plusieurs cavités espacées les unes des autres dans la longueur de la lame.

En variante, il est possible de réunir l'ensemble des cavités d'un même niveau pour former une seule cavité.

La figure 8 présente une vue en coupe d'une lame 9 conformément à un troisième mode de réalisation.

Dans ce mode de réalisation, les extrémités des branches 45, 47 opposées au sommet du motif en forme de V se terminent en pointe. De cette manière on améliore le retrait de l'élément moulant formant la cavité lors de l'opération de démoulage.

La figure 9 présente une vue en coupe d'une lame 9 conformément à un quatrième mode de réalisation.

Dans ce mode de réalisation, les branches 45, 47 sont dissymétriques. La seconde branche 47 est ici plus petite que la première branche 45.

Par cette dissymétrie des branches, les extrémités des premières branches 45, 47 sont à des distances différentes de parois latérales de la lame 9. La distance D1 entre la première branche 45 et une première paroi latérale 57 est ainsi plus petite que la distance D2 entre la seconde branche 47 et une seconde paroi latérale 59. Au cours d'un roulage sur une chaussée enneigée, la pression de contact est alors plus importante au niveau de l'arête 16 formée par l'intersection de la seconde paroi latérale 59 avec la surface de contact 13 de la lame.

## Revendications

1. Bande de roulement pour pneumatique neige comportant des lames (9) délimitées par des découpures, chaque lame comprenant une surface de contact (13) destinée à entrer en contact avec une chaussée, tout ou partie desdites lames comprenant au moins une cavité (15 ; 15a, 15b) formée de deux parties inclinées (41, 43) s'étendant dans la longueur de la lame, lesdites parties inclinées formant un V selon une coupe circonférentielle, le sommet dudit V étant dirigé vers la surface de contact (13) de la lame, **caractérisée en ce que** l'angle d'inclinaison (β) de chaque partie inclinée par rapport à une direction perpendiculaire à la surface de contact est compris entre 30° et 60° et la distance L mesurée entre les extrémités du V opposées au sommet est déterminée de sorte que $L \leq \frac{1}{2} * W$, avec W la largeur de la lame mesurée selon la direction circonférentielle $L \leq \frac{1}{2} * W$, **en ce que** l'épaisseur E de chaque partie inclinée est déterminée de sorte que $E \leq \frac{1}{2} * L$, et **en ce que** la bande de roulement comprend une incision (12) s'étendant principalement selon la direction circonférentielle et par laquelle ladite cavité débouche sur la surface de contact de la lame.

2. Bande de roulement selon la revendication 1, **caractérisée en ce que** $E = \frac{K}{(W - L)}$, avec K compris entre 1,5 et 3,5.

3. Bande de roulement selon la revendication 2, **caractérisée en ce que** K est compris entre 2 et 3.

4. Bande de roulement selon l'une quelconque des revendications 2 ou 3, **caractérisée en ce que** K est égal à 2,4.

5. Bande de roulement selon l'une quelconque des revendications 1 à 4 **caractérisée en ce que** l'angle d'inclinaison de chaque partie inclinée est de 45 degrés.

6. Bande de roulement selon l'une quelconque des revendications 1 à 5 dans laquelle les extrémités du V opposées au sommet se terminent en pointe.

7. Bande de roulement selon l'une quelconque des revendications 1 à 6 **caractérisée en ce que** les parties inclinées sont dissymétriques.

8. Bande de roulement selon l'une quelconque des revendications 1 à 7 dans laquelle la lame comprend au moins deux cavités (15a, 15b) décalées l'une de l'autre, selon la direction perpendiculaire à la surface de contact de la lame, d'une distance au moins égale à 0,1 mm et au plus égale à 8 mm.

## Patentansprüche

1. Reifenprofil für Winterreifen, umfassend Lamellen (9), die von Einschnitten begrenzt sind, wobei jede Lamelle eine Kontaktfläche (13) umfasst, die dazu bestimmt ist, mit einer Fahrbahn in Kontakt zu kommen, wobei die Gesamtheit oder ein Teil der Lamellen mindestens einen Hohlraum (15; 15a, 15b) umfasst, der von zwei geneigten Teilen (41, 43) gebildet ist, die sich in der Länge der Lamelle erstrecken, wobei die geneigten Teile ein V in einem Umfangsschnitt bilden, wobei die Spitze des V zu der Kontaktfläche (13) der Lamelle gerichtet ist, **dadurch gekennzeichnet, dass** der Neigungswinkel (β) jedes geneigten Teils in Bezug zu einer Richtung senkrecht auf die Kontaktfläche zwischen 30° und 60° beträgt, und der Abstand L, der zwischen den Enden des V, die der Spitze gegenüberliegen, derart bestimmt ist, dass L≤½*W, wobei W die Breite der Lamelle in Umfangsrichtung gemessen ist, dass die Dicke E jedes geneigten Teils derart bestimmt ist, dass E≤½*L, und dass das Reifenprofil einen Einschnitt (12) umfasst, der sich hauptsächlich in Umfangsrichtung erstreckt, und durch den der Hohlraum auf der Kontaktfläche der Lamelle mündet.

2. Reifenprofil nach Anspruch 1, **dadurch gekennzeichnet, dass** E=K/(W-L), wobei K zwischen 1,5 und 3,5 beträgt.

3. Reifenprofil nach Anspruch 2, **dadurch gekennzeichnet, dass** K zwischen 2 und 3 beträgt.

4. Reifenprofil nach einem der Ansprüche 2 oder 3, **dadurch gekennzeichnet, dass** K gleich 2,4 ist.

5. Reifenprofil nach einem der Ansprüche 1 bis 4, **dadurch gekennzeichnet, dass** der Neigungswinkel jedes geneigten Teils 45 Grad beträgt.

6. Reifenprofil nach einem der Ansprüche 1 bis 5, bei dem die Enden des V, die der Spitze gegenüberliegen, in einer punktförmigen Spitze enden.

7. Reifenprofil nach einem der Ansprüche 1 bis 6, **dadurch gekennzeichnet, dass** die geneigten Teile dissymmetrisch sind.

8. Reifenprofil nach einem der Ansprüche 1 bis 7, bei dem die Lamelle mindestens zwei Hohlräume (15a, 15b) umfasst, die zueinander in die Richtung senkrecht auf die Kontaktfläche der Lamelle um einen Abstand mindestens gleich 0,1 mm und höchstens gleich 8 mm versetzt sind.

## Claims

1. Tread for a snow tyre comprising lugs (9) defined by cut-outs, each lug comprising a contact surface (13) designed to come into contact with a road, all or part of said lugs comprising at least one cavity (15; 15a, 15b) formed by two inclined parts (41, 43) extending along the length of the lug, said inclined parts forming a V-shape according to a circumferential section, the apex of said V-shape being directed towards the contact surface (13) of the lug, **characterized in that** the angle of inclination (β) of each inclined part in relation to a direction perpendicular to the contact surface is between 30° and 60° and the distance L measured between the ends of the V-shape opposing the apex is determined such that $L \leq \frac{1}{2} * W$ where W is the width of the lug measured circumferentially, **in that** the thickness E of each inclined part is determined such that $E \leq \frac{1}{2} * L$, and **in that** the tread comprises a sipe (12) extending primarily circumferentially and by means of which said cavity opens onto the contact surface of the lug.

2. Tread according to Claim 1, **characterized in that** $E = \frac{K}{(W - L)}$, where K is between 1.5 and 3.5.

3. Tread according to Claim 2, **characterized in that** K is between 2 and 3.

4. Tread according to any one of Claims 2 or 3, **characterized in that** K is equal to 2.4.

5. Tread according to any one of Claims 1 to 4, **characterized in that** the angle of inclination of each inclined part is 45 degrees.

6. Tread according to any one of Claims 1 to 5, in which the ends of the V-shape opposing the apex terminate in a point.

7. Tread according to any one of Claims 1 to 6, **characterized in that** the inclined parts are asymmetrical.

8. Tread according to any one of Claims 1 to 7, in which the lug comprises at least two cavities (15a, 15b) offset relative to one another, in a direction perpendicular to the contact surface of the lug, by a distance at least equal to 0.1 mm and at most equal to 8 mm.

Fig. 1

Fig. 2

Fig. 3

Fig. 4

Fig. 5

Fig. 6

Fig. 7

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2763892

- EP 1616719 A